# EUROPÄISCHE PATENTANMELDUNG

(11) **EP 1 527 815 A1**
(43) Veröffentlichungstag der Anmeldung: **04.05.2005**
(21) Anmeldenummer: 03024715.9
(22) Anmeldetag: 28.10.2003
(51) Int. Cl.: B01J 3/04, B08B 9/08

(54) **Verfahren und Vorrichtung zum Abführen unerwünschter Substanzen aus Prozessprodukten und/oder Autoklaven**

(71) Anmelder: Wiessner GmbH, 95448 Bayreuth (DE)
(72) Erfinder: HEPPER, Ronald, 95511 Mistelbach (DE); KALLEE, Klaus, 06188 Landsberg (DE)
(74) Vertreter: Schröer, Gernot H.

(57) **Zusammenfassung**

Zum Abführen wenigstens einer unerwünschten Substanz aus oder von wenigstens einem in einem Innenraum eines Autoklaven befindlichen Prozessprodukt und/oder aus oder von wenigstens einem im Innenraum befindlichen oder an den Innenraum angrenzenden Innenteil des Autoklaven, wird
a) in wenigstens einem Spülschritt
b) zunächst Spülgas in den Autoklaven eingeleitet und
c) anschließend das Spülgas zusammen mit der bzw. den abzuführenden Substanz(en) aus dem Autoklaven ausgeleitet,
d) wobei als Spülgas Umgebungsluft aus einer Umgebung des Autoklaven, insbesondere aus einem Innenraum eines den Autoklaven umgebenden Gebäudes, insbesondere einer Halle, und/oder einer Außenumgebung außerhalb eines den Autoklaven umgebenden Gebäudes, insbesondere einer Halle, verwendet wird.

## Beschreibung

Die Erfindung betrifft ein Verfahren und eine Vorrichtung zum Abführen wenigstens einer unerwünschten Substanz aus einem Prozessprodukt und/oder einem Innenraum eines Autoklaven.

Aus *EP 0 693 366 B1* ist ein Verfahren zum Herstellen von Verbundglasscheiben bekannt, bei dem zwei vorbeschichtete Glasscheiben über eine dazwischen angeordnete Kunststofffolie in einem Autoklaven unter Druck und einer erhöhten Temperatur miteinander verbunden werden. Dabei wird mit einem Druck zwischen 8 und 14 bar (800 bis 14.000 kPa) und einer Temperatur zwischen 100°C und 140°C gearbeitet. Bei dem Verbindungsprozess im Autoklaven wird die zunächst aus nachgiebigem Kunststoff bestehende Folie ausgehärtet und bildet dann eine starre feste Verbindung der beiden Glasscheiben. Gemäß *EP 0 693 366 B1* wird am Umfang des Verbunds aus Scheibe und Folie ein Umfangsband aufgebracht zum Abschluss und/oder Schutz der Kante der Verglasung.

In einem aus der Praxis bekannten Verfahren zum Herstellen von Verbund-Sicherheits-Glas-Scheiben werden die Verbundscheiben mit der dazwischen angeordneten Kunststofffolie auf einem Transportwagen stehend in den Autoklaven gefahren und danach wird im Autoklaven ein Druck von 13,5 bar erzeugt. Bei diesem Druck und einer Temperatur von ca. 150 °C erfolgt der Verbund. Anschließend wird bei Überdruck auf ca. 45°C abgekühlt. Jetzt setzt die kritische Entspannungsphase auf Umgebungsdruck ein, wobei bei dieser Entspannung Weichmacher aus der Folie ausdampft und die Folie fest wird. Als Kunststoff für Folie ist unter anderem ein PVB (Polyvinylbutyral) im Einsatz. Ein aus einer solchen Folie austretender Weichmacher ist Dihexyladipat. Die fertig hergestellten Verbundglaseinheiten werden aus dem Autoklaven herausgenommen und in ein Glaslager verbracht oder gleich transportiert. Beim Transport werden die Verbundgläser mit einem die Glasoberflächen und -kanten schützenden Transportpuder versehen.

Beim Aushärten der Kunststofffolie im Autoklaven werden bei diesen bekannten Verfahren zum Herstellen von Verbundglas die im Kunststoff enthaltenen Weichmacher verdampft, so dass die durch die Weichmacher bewirkte Plastizität oder Elastizität des Kunststoffes herabgesetzt wird und eine im Wesentlichen starre Polymerstruktur des Kunststoffes in der Folie entsteht.

Ein in der Praxis auftretendes Problem besteht nun darin, dass nach dem Prozess im Autoklaven immer noch Restmengen des Weichmachers in der Kunststofffolie der Verbundgläser enthalten sind. Infolgedessen kommt es zu Restausdampfung in den Glaslagern oder beim sofortigen Transport, insbesondere da die Scheiben auch noch eine Resttemperatur von 45°C beim Herausnehmen aus dem Autoklaven haben. Die während des Transportes der Verbundglasscheiben noch aus der Kunststofffolie ausdampfenden Restmengen des Weichmachers reagieren nun chemisch mit dem Transportpuder. Durch diese chemische Reaktion mit dem Weichmacher härtet das Transportpuder aus, wodurch vor allem bei längeren Transporten Kratz- und Schleifspuren und Schraffuren auf dem beschichteten bzw. veredelten Glas entstehen. Deshalb sind die Transportreichweiten für die derart hergestellten Verbundgläser derzeit beschränkt.

Ein weiteres Problem besteht darin, dass die Dämpfe des beim Prozess im Autoklaven aus der Kunststofffolie entwichenen Weichmachers einerseits den Autoklaven und dessen Innenbeschichtung kontaminieren und andererseits beim Öffnen des Autoklaven nach dem Prozess aus dem Autoklaven austreten, was für die Bedienpersonen eine gesundheitliche Belastung darstellt.

Die *DE 100 49 078 A1* offenbart ein Autoklaven-Array zur Untersuchung chemischer Reaktionen, insbesondere der Wirkung von Katalysatoren. Das Autoklaven-Array ist skalierbar und besteht aus Autoklavenmodulen, die jeweils aus einem dichtend über einem Reaktionsgefäß befestigten Reaktormantel bestehen und die unabhängig voneinander über steuerbare Autoklavenventile aus einer einen Drucksensor enthaltenden Druckregelkammer, die über mindestens ein steuerbares Ventil mit mindestens einer Gaszufuhr und mindestens einem Gasauslass verbunden ist, mit Gas gefüllt werden können. Am Gasauslass an der Referenzvolumenkammer oder an der Druckregelkammer ist eine Vakuumpumpe angeschlossen. Beim Untersuchen der Reaktionsansätze werden folgende Verfahrensschritte durchgeführt: Temperieren der Autoklavenmodule, mehrmaliges Fluten und Sekurieren (Sekurieren = Entfernen von Luft und Wasserspuren durch mehrmaliges Fluten mit Inertgas und Evakuieren) des gesamten Gasleitungssystems mit Inertgas (Argon) Fluten der Autoklavenmodule mit Inertgas (Ar), Befüllen der Autoklavenmodule mit den zu reagierenden Substanzen (Reaktanden) mittels Spritze nach Öffnen des verschraubbaren Reaktormantelkanals, Verschließen des Reaktormantelkanals, Stoppen des Flutens mit Inertgas, Sekurieren der Autoklavenmodule durch Entspannung des Argon-Überdrucks, Evakuieren der Autoklavenmodule für eine Sekunde und Befüllen mit Reaktionsgas (Wasserstoff) eines Druckes von 1 bar, anschließend Befüllen der einzelnen Autoklavenmodule mit Reaktionsgas gemäß der Solldruckvorgabe, Messung der Istdrucke in den einzelnen Autoklavenmodulen nach Ablauf der Reaktionen, Entspannung der Autoklaven-Array-Vorrichtung und Entnahme der Reaktionsgefäße zur Analyse. Als Temperaturbereich für die Prozessbedingungen in dem Autoklaven-Array wird ein Bereich zwischen - 50°C und 200°C angegeben und als Druckbereich ein Bereich von 0 bar bis 200 bar.

Aus *EP 0 553 926 B1* ist ein Verfahren zur terminalen Dampfsterilisation von gefüllten Kunststoff- oder Glasspritzen oder -kartuschen, in denen eine Flüssigkeit für medizinische Zwecke enthalten ist, bekannt. Die Spritze oder Kartusche wird dazu nach Befüllen und hermetischem Abdichten in einen Autoklaven eingebracht und bei einem Autoklavendruck, der geringer ist als Druck des Inhaltes der Spritze oder der Kartusche, und bei einer Sterilisationstemperatur von 121,5°C sterilisiert. In dieser Druckschrift *EP 0 553 926 B1* sind als Stand der Technik Verfahren zur terminalen Sterilisation beschrieben, bei denen gesättigter Dampf mit Luft in einen Autoklaven unter einem Druck von 6,895 x 10⁻² bar bis 1,379 bar und einer Temperatur von 100°C bis 150°C für etwa 1 Minute bis 30 Minuten eingebracht wird, danach Dampf in die Autoklavenkammer gebracht wird, so dass die Temperatur von etwa 100°C bis 125°C erreicht wird, die Temperatur aufrecht erhalten wird für eine ausreichende Zeit, um den Inhalt des Autoklaven zu sterilisieren, und danach der Autoklave abgekühlt wird und die sterilisierten Behälter daraus entnommen werden. Beim Verfahren gemäß *EP 0 553 926 B1* wird nach dem Erhitzen des Inhalts des Autoklaven, der Spritze oder Kartusche, die Autoklavenkammer abgekühlt mit einer Wasserkaskade oder mit Düsensprühung oder Luftzug mit einer Rate, die keinen plötzlichen Zusammenfall der Dampfatmosphäre in der Autoklavenkammer zulässt. Dazu wird der Druck in der Kammer um 6,895 x 10⁻² bar niedriger eingestellt als der Druck innerhalb der Plastikspritze oder der Plastikkartusche. Der Druck im Autoklaven während der Sterilisation ist niedriger eingestellt als der sich bei der Sterilisationstemperatur einstellende Dampfdruck innerhalb des Behälters, der bei 121,5°C zwischen 1,013 bar und 1,048 bar liegt. Eine Methode zur Reinigung des Autoklaven ist in *EP 0 553 926 B1* nicht offenbart. Da die Spritzen und Kartuschen hermetisch abgedichtet sind während des Sterilisationsprozesses stellt sich das Problem des Abführens von Substanzen bei diesem bekannten System nicht.

Aus *WO 01*/*78887 A1* ist ein Autoklav für die Sterilisation von chirurgischen Instrumenten bekannt, bei dem eine spezielle Isolierung für die Tür des Autoklaven vorgesehen ist. Die Temperatur im Autoklaven wird mit 140°C angegeben. Hinweise auf eine Reinigung des Autoklaven oder ein Abführen von unerwünschten Gasen oder Dämpfen kann man *WO 01*/*78887 A1* nicht entnehmen.

Die *WO 98*/*32471 A1* offenbart ein Sterilisationssystem, bei dem zu sterilisierende Güter in unterschiedliche Bereiche eines Autoklaven angeordnet werden und dort mittels Dampf auf eine Sterilisationstemperatur erhitzt werden. Es ist ein spezielles Regelverfahren für die Regelung der Temperatur in den einzelnen Bereichen des Autoklaven offenbart, bei dem die Temperaturen der verschiedenen Bereiche miteinander verglichen werden und aneinander angeglichen werden. Eine Reinigung oder ein Abführen von unerwünschten Gasen oder Dämpfen ist nicht offenbart.

*US 5,821,438 A* offenbart ein System zum Testen von mechanischen oder anderen Eigenschaften von Materialien, bei dem die Materialien in einem Autoklaven einer simulierten Arbeitsumgebung und Arbeitsatmosphäre ausgesetzt werden. Beispielsweise werden damit Risse in metallischen Gegenständen und deren Größerwerden unter verschiedenen Atmosphären untersucht. Um reale Arbeitsatmosphären und deren Änderungen realistisch simulieren zu können, ist es bei einem solchen System erforderlich, im Autoklaven schnelle Änderungen von Atmosphären zu ermöglichen. Als typische Arbeitsatmosphäre wird eine Dampfatmosphäre angegeben, die oft mit einer erhöhten Temperatur und/oder erhöhten Drücken kombiniert ist. Um die im Autoklaven herrschende Atmosphäre schnell ändern zu können, ist gemäß *US 5,821,438 A* dem Autoklaven ein Behälter zugeordnet, der eine Kammer zum Aufnehmen und Abgeben von dampferzeugendem Material, in der Regel Wasser, aufweist. Mittels eines pneumatisch betätigten Verschließmechanismus kann der gesamte Inhalt der Kammer auf einmal in das Innere des Autoklaven befördert werden und das Material verdampft unter den erhöhten Temperaturen und ggf. Drücken im Autoklaven schlagartig, so dass eine schnelle Änderung der Gasatmosphäre in eine Dampfatmosphäre innerhalb des Autoklaven ermöglicht wird. Diese rasche Expansion oder Volumenänderung des dampferzeugenden Materials durch Phasenübergang in die Dampfphase ist ein Resultat der Druckdifferenz zwischen dem Zugabebehälter und dem Inneren des Testautoklaven und auch der Temperaturdifferenz zwischen den beiden Behältnissen. In *US 5,821,438 A* finden sich keine Angaben über die Reinigung oder das Abführen von Gas oder Dampf aus dem Autoklaven.

Aus der weiteren Druckschrift *WO 96*/*12557 A1* ist eine Anordnung zum Evakuieren einer Autoklavenkammer bekannt, die eine Flüssigkeitsringvakuumpumpe umfasst. In *WO 96*/*12557 A1* wird der Autoklave zum Durchführen von Sterilisationen benutzt. Die Flüssigringvakuumpumpe ist in einem Wasserkreislauf eingebunden, wobei das Wasser eine Dicht- und Kühlfunktion hat. Bei Abpumpen des Dampfes aus dem Autoklaven wird zu Beginn eines Evakuierungsschrittes die Temperatur innerhalb der Vakuumpumpe schlagartig erhöht, weshalb eine schnelle Kühlung des zirkulierendes Wassers erforderlich ist, um das Wasser am Verdampfen zu hindern. Um den Temperaturanstieg zu kontrollieren, wird eine indirekte Kühlung mittels eines Wärmetauschers und einem Sekundärkreislauf zur Kühlung des Wasserprimärkreislaufs der Flüssigkeitringpumpe vorgeschlagen in Kombination mit einer zusätzlichen Wasserzuführung in diesen Kreislauf. In Normalbetrieb des Autoklaven wird zu Beginn die Autoklavenkammer mittels der Vakuumpumpe von einem Atmosphärendruck auf einen Unterdruck von etwa 100 bis 70 mbar evakuiert. Dann wird Dampf in die Autoklavenkammer eingelassen und die Kammer wiederum evakuiert. Dieser Prozess wird zwei oder dreimal wiederholt, bevor der eigentliche Sterilisationsprozess durchgeführt wird. Dabei wird das im Wasserkreislauf der Flüssigkeitsringvakuumpumpe fließende Wasser permanent durch den Sekundärkreislauf über den Wärmetauscher gekühlt. Nach dem Sterilisationsprozess wird der Sterilisationsdampf aus der Autoklavenkammer evakuiert, zum Erreichen eines niedrigen Vakuumdrucks, um das Material innerhalb der Kammer zu trocknen.

Bei Prozessen in Autoklaven ist es häufig erforderlich, den Autoklaven oder darin eingebrachte Produkte zu reinigen oder beim Prozess entstandene unerwünschte Substanzen aus dem Autoklaven zu entfernen.

Aus *US 4,141,373 A* ist eine Methode zum Entfernen von Öl von Metallschrott bekannt, bei der der ölverschmutzte Schrott in eine hermetisch abgedichtete Kammer eingebracht wird, die Kammer mittels eine Vakuumpumpe evakuiert wird, um die in der Kammer enthaltene Luft weitgehend zu entfernen, anschließend die Kammer mit einem Inertgas wie Stickstoff geflutet wird um sicherzustellen, dass die Atmosphäre in der Kammer nur einen geringen Sauerstoffanteil hat, insbesondere 2 % Luft oder weniger, anschließend das Inertgas erhitzt wird innerhalb der Kammer, bis das Schrottmetall eine vorbestimmte Temperatur erreicht, bei der das Öl auf dem Schrott verdampft, wobei diese Temperatur von der Siedetemperatur des Öls einerseits und von dem Vakuumdruck in der Kammer andererseits abhängt und normalerweise zwischen etwa 150°F und 1100°F, das sind 66°C bis 593°C, liegt. Während des Aufheizens kann ein geringer Unterdruck in der Kammer aufrechterhalten werden. Anschließend wird die Kammer evakuiert, um die Gasatmosphäre, die eine Mischung aus dem Inertgas und dem verdampften Öl umfasst, aus der Kammer zu entfernen, wobei bei dieser Evakuierung kontinuierlich Inertgas in die Kammer nachgefüllt wird.

Aus *DE 33 12 538 A1* ist ein Verfahren zum Entfernen von Kondensationsprodukten von Bauteiloberflächen bekannt, insbesondere von Polymerschichten oder Polymerrückständen an Bauteilen der in der Kunststoffverarbeitungsindustrie zur Verarbeitung eingesetzten Geräte.

Bei dem Verfahren gemäß *DE 33 12 538 A1* wird der mit den Kondensationsprodukt beschichtete Gegenstand in das Innere eines geschlossenen Gefäßes gebracht und die Luft aus dem Inneren des Gefäßes entfernt, indem man Dampf in das Gefäß hinein- und durch dieses hindurchströmen lässt. Der Druck in dem Gefäß bleibt dabei nahezu bei Atmosphärendruck. Nun wird mittels eines Überhitzers die Temperatur und damit der Dampfdruck in dem System erhöht, bis der Dampf vom gesättigten Zustand in einen überhitzten Zustand übergeführt ist. Dieser Übergang erfolgt wegen des im System eingestellten Atmosphärendrucks bei einer Temperatur von etwa 100°C, der Siedetemperatur des Wasser bei Atmosphärendruck. Der überhitzte Wasserdampf wird kontinuierlich weiter umgewälzt, bis seine Temperatur einen Wert in einem Bereich zwischen 170°C und 400°C erreicht. Dieser Temperaturbereich liegt oberhalb der Schmelztemperatur der typischen Kondensationspolymere bzw. Kondensationsprodukte. Innerhalb des angegebenen Temperaturbereichs findet eine hydrolytische Zersetzung des Polymers statt, die die Produkte depolymerisiert. Das von den Gegenstände abgetropfte oder hydrolytisch zersetzte und mit dem Wasserdampf mitgerissene Kondensationsprodukt wird mit diesem Verfahren ohne Schädigung der zu reinigenden Gegenstände entfernt. Der Druck im Inneren des Gefäßes wird gerade hoch genug gewählt, um zu verhindern, dass Luft aus der Umgebung in Kontakt mit den zu reinigenden Gegenständen gelangt, so dass ein gegenüber dem Atmosphärendruck geringfügig erhöhter Druck ausreicht.

Aus *DE 38 23 322 A1* ist ein Verfahren zum Reinigen und Entfetten von Behandlungsgut mit Lösungsmitteln bekannt, bei dem in einer abgeschlossenen Behandlungskammer Lösungsmittel auf das Behandlungsgut aufgebracht und das Behandlungsgut anschließend mit trockener erhitzter Luft getrocknet wird. Die mit dem Lösungsmittel und ggf. Verunreinigungen in Dampfform angereicherte Luft wird aus der Behandlungskammer in einem Kältemittelkühler unter Kondensieren des Lösungsmittels abgekühlt und nach dem Erhitzen wieder der Behandlungskammer in eine Kreislauf zugeführt, während das kondensierte Lösungsmittel für die nächste Behandlung rezirkuliert wird. Die lösungsmittelhaltige Luft aus der Behandlungskammer wird durch die den Kühler verlassende Reinluft in einem Wärmetauscher vorgekühlt und erst anschließend in den Kühler geleitet, während die solchermaßen vorgewärmte Reinluft anschließend erhitzt wird. Während in der Reinigungsphase bei der Zuführung des Lösungsmitteldampfes in die Behandlungskammer dort ein Überdruck entsteht, wird während der Trocknungsphase durch die Dampfkondensation im Kältemittelkühler ein Unterdruck erzeugt. Es muss deshalb die Behandlungskammer belüftet werden, was bisher durch zeitweiliges Öffnen einer Abluftleitung geschah. Dieses Belüften ist vor allem vor dem Öffnen der Behandlungskammer zum Austausch des Behandlungsgutes erforderlich. Dabei ließ sich nicht vermeiden, dass kurzfristig auch Lösungsmitteldampf austritt. Gemäß der *DE 38 23 322 A1* wird beim Einführen des Lösungsmitteldampfes in die Behandlungskammer die Luft aus der selben in einen abgeschlossenen volumenveränderlichen Raum verdrängt und während der Trocknungsphase der entstehende Unterdruck durch Rücksaugen aus diesem Verdrängungsraum kompensiert, wodurch eine Belüftung aus der Umgebung entfallen kann.

Die *DE 41 36 990 A1* offenbart ein Verfahren zur Entfettung und Reinigung von mit fett- und/oder ölhaltigen Stoffen behaftetem Gut, wobei das zu reinigende Gut unter Vakuumbedingungen in einer Prozesskammer derart erwärmt wird, dass die Fette und/oder Öle in Abhängigkeit ihres Aggregatzustandes vom Gut abgetrennt werden, insbesondere verdampft werden. Die abgetrennten Dämpfe der Fette und/oder Öle werden in einem Kondensator niedergeschlagen und als Kondensat gesammelt. Der Luftpartialdruck in der Prozesskammer beträgt höchstens 10 hPa. Alternativ wird ein Verfahren vorgeschlagen, bei dem das von den fett- und/oder ölhaltigen Stoffen zu reinigende Gut in eine Vakuumkammer eingebracht wird, in einem ersten Reinigungsschritt ein Lösungsmittel aufgebracht wird und das sich bildende Gemisch aus Lösungsmittel und abgelösten Fetten bzw. Ölen einem Verdampfer zugeführt wird, in einem zweiten Reinigungsschritt der sich am Verdampfer bildende Dampf dem Gut zugeleitet wird, an dessen Oberfläche der Dampf kondensiert und unter Kondensatbildung die Restverschmutzung beseitigt, in einem dritten Reinigungsschritt der Dampf einem Kondensator zugeführt wird, dessen gewonnenes Kondensat dem Reinigungsprozess als Lösungsmittel erneut zugeführt wird und in einem vierten Reinigungsschritt die Vakuumkammer derart weiter evakuiert wird, dass restliche Lösungsmitteldämpfe vollständig entfernt werden. Das Lösungsmittel kann insbesondere Petroleum oder Kerosin sein.

In *DE 42 31 306 A1* ist ein Verfahren zur Reinigung durch Polymere verschmutzten Maschinenteilen beschrieben, bei dem die durch Polymere verschmutzten Teile einer Erwärmung ausgesetzt werden im Inneren eines Autoklaven. In den Autoklav wird ein Dampfstrom eingeleitet, der sich mit den Reststoffen der Polymere vermischt, die von der thermischen Zersetzung dieser ursprünglich auf den zu behandelnden Teilen vorhandenen Polymere herrühren. Die aus dem Autoklav austretende Mischung aus überhitztem Dampf und thermisch zersetzten Reststoffen von Polymeren wird einer Behandlung zur Abscheidung der Schadstoffe unterworfen. Die Temperaturen im Autoklaven liegen zwischen 350°C und 400°C, die Temperatur des überhitzten Dampfes bei der Einleitung im Wesentlichen zwischen 400°C und 450°C. Nach der Einleitung des überhitzten Dampfes in den Autoklaven wird ein Luftstrom mit einer im Wesentlichen zwischen 400°C und 450°C liegendenden Temperatur eingeblasen, wobei die Temperatur im Innern des Autoklaven während der Einleitung des überhitzten Dampfstromes und/oder der überhitzten Luft im Wesentlichen 430°C beträgt. Der Überdruck über Atmosphärendruck im Innern des Autoklav beträgt während der Behandlung im Wesentlichen zwischen 0 bar und 1 bar.

Die *DE 35 23 386 A1* offenbart ein Reinigungsgerät für einen Autoklaven mit einem drehbaren Düsenkopf zum Einsprühen von Reinigungsflüssigkeit unter Druck.

Ein ähnliches hydrodynamisches Reinigungsgerät ist aus *DE 299 18 774 U1* bekannt.

Der Erfindung liegt nun die Aufgabe zugrunde, ein neues Verfahren zum Durchführen eines Prozesses in einem Autoklaven anzugeben, mit dem Substanzen, insbesondere unerwünschte Substanzen wie Neben- oder Abfallprodukte oder Restbestände oder Verunreinigungen, effizient aus dem Autoklaven und/oder darin befindlichen Prozessprodukten entfernt werden können.

Diese Aufgabe wird gemäß der Erfindung gelöst durch ein Verfahren mit den Merkmalen des Anspruchs 1 und eine Vorrichtung mit den Merkmalen des Anspruchs 18. Vorteilhafte Ausgestaltungen und Weiterbildungen des Verfahrens und der Vorrichtung ergeben sich aus den vom Anspruch 1 bzw. Anspruch 18 jeweils abhängigen Ansprüchen.

Das Verfahren gemäß Anspruch 1 ist zum Abführen (oder: Entfernen) wenigstens einer unerwünschten (oder: störenden, abzuführenden) Substanz aus oder von wenigstens einem in einem Innenraum eines Autoklaven befindlichen Prozessprodukt und/oder aus oder von wenigstens einem im Innenraum befindlichen oder an den Innenraum angrenzenden Innenteil des Autoklaven geeignet und bestimmt und umfasst die folgenden Verfahrensschritte:
a) in wenigstens einem Spülschritt wird
b) zunächst Spülgas in den Autoklaven eingeleitet (oder: zugeführt) und
c) anschließend wird das Spülgas zusammen mit der bzw. den abzuführenden Substanz(en) aus dem Autoklaven ausgeleitet (oder: abgeführt, abgesaugt, herausgefördert.,
d) wobei als Spülgas Umgebungsluft aus einer Umgebung des Autoklaven, insbesondere aus einem Innenraum eines den Autoklaven umgebenden Gebäudes, insbesondere einer Halle, und/oder einer Außenumgebung außerhalb eines den Autoklaven umgebenden Gebäudes, insbesondere einer Halle, verwendet wird.

Die Vorrichtung gemäß Anspruch 18 ist zum Abführen wenigstens einer unerwünschten Substanz aus oder von wenigstens einem in einem Innenraum eines Autoklaven befindlichen Prozessprodukt und/oder aus oder von wenigstens einem im Innenraum befindlichen oder an den Innenraum angrenzenden Innenteil des Autoklaven sowie insbesondere zum Durchführen eines Verfahrens gemäß der Erfindung geeignet und bestimmt und umfasst dazu
a) Mittel zum Durchführen wenigstens eines Spülschrittes in wenigstens einem Autoklaven mit
b) wenigstens einer Spülgaszuführeinrichtung zum Einleiten von Spülgas in den Autoklaven,
c) wenigstens einer an den Autoklaven angeschlossenen oder anschließbaren Gasfördereinrichtung, insbesondere einer Evakuierungseinrichtung, die insbesondere wenigstens eine Vakuumpumpe umfasst, zum Ausleiten des Spülgases zusammen mit der bzw. den abzuführenden Substanz(en) aus dem Autoklaven,
d) wobei die Spülgaszuführeinrichtung Umgebungsluft aus einer Umgebung des Autoklaven, insbesondere aus einem Innenraum eines den Autoklaven umgebenden Gebäudes, insbesondere einer Halle, und/oder einer Außenumgebung außerhalb eines den Autoklaven umgebenden Gebäudes, insbesondere einer Halle, als Spülgas zuführt.

Unter einem Autoklav oder Autoklaven wird ein von einer druckdichten Wandung umschlossener Prozessraum oder Reaktor oder Prozesskammer oder Prozessbehälter verstanden, der über wenigstens eine Öffnung, die im Allgemeinen druckdicht verschließbar ist, zur Herausnahme von Prozessprodukten zugänglich ist.

Die Erfindung beruht auf der Überlegung, noch in dem Prozessprodukt, insbesondere nach einem Primärprozess, und/oder in dem Innenbereich des Autoklaven enthaltene unerwünschte Substanz(en) unter definierten Bedingungen in dem Autoklaven gezielt und kontrolliert, insbesondere in einem Sekundärprozess, mit einem Spülgas auszuspülen und dabei als Spülgas, ggf. vorbehandelte oder konditionierte, Umgebungsluft zu verwenden. Dadurch wird die Umgebung des Autoklaven beim Öffnen des Autoklaven und Herausnehmen des Prozessproduktes nicht mehr mit der unerwünschten Substanz kontaminiert und das Prozessprodukt bzw. der Autoklave ist von der unerwünschten Substanz zu einem Grad befreit, der durch die Bedingungen und die Zeitdauer des Reinigungs- oder Sekundärprozesses festgelegt werden kann. Insbesondere ist es möglich, die unterwünschte Substanz praktisch vollständig aus dem Prozessprodukt zu entfernen, bevor das Prozessprodukt aus dem Autoklaven entnommen wird, oder den Autoklaven so vollständig zu reinigen, dass keine gesonderten Reinigungsvorgänge mehr erforderlich sind. Außerdem erhält man im Autoklaven für jeden Primärprozess reproduzierbare Bedingungen hinsichtlich der Reinheit des Autoklaven. Das Spülen mit Umgebungsluft hat den Vorteil, dass Umgebungsluft als Spülgas immer zur Verfügung steht und somit keine Vorratshaltung von Gasflaschen oder anderen Gasbehältern erforderlich ist. Es hat sich gezeigt, dass Umgebungsluft für eine Vielzahl von Prozessen zum Reinigen oder Spülen eines Autoklaven ausreichend ist und die Verwendung von Inertgas wie beim Stand der Technik nicht erforderlich.

Vorteilhafte Weiterbildungen und Ausgestaltungen des Verfahrens und der Vorrichtung gemäß der Erfindung ergeben sich aus den von Anspruch 1 bzw. Anspruch 18 jeweils abhängigen Ansprüchen.

In einer besonders vorteilhaften Ausführungsform wird konditionierte Umgebungsluft in den Autoklaven als Spülgas eingeleitet, wobei als Konditioniergröße die Temperatur und/oder Feuchte und/oder Reinheit der Umgebungsluft vorgesehen sein kann. Die Spülgaszuführeinrichtung umfasst dazu wenigstens eine Konditioniereinrichtung.

Vorzugsweise wird die Umgebungsluft mittels wenigstens eines Filters, insbesondere eines Grobfilters und/oder eines Feinfilters und/oder eines Schwebstofffilters, gefiltert.

Alternativ oder zusätzlich kann die Umgebungsluft auch getrocknet werden, insbesondere die relative Feuchte der Umgebungsluft auf einen Wert unterhalb 60 %, insbesondere unter 40 % und vorzugsweise unter 25 %, eingestellt werden. Die Konditioniereinrichtung umfasst dann wenigstens eine Trocknungseinrichtung zum Trocknen der Umgebungsluft, insbesondere eine Kältetroclcnungseinrichtung.

Das Prozessprodukt und/oder das Innenteil bestehen bzw. besteht in allen Ausführungsform vorzugsweise wenigstens teilweise aus wenigstens einem Werkstoff, insbesondere einem Polymerwerkstoff und/oder einem Kunststoff, der die wenigstens eine unerwünschte Substanz enthält, wobei die unerwünschte Substanz in einem vorgegebenen Druck- und Temperaturbereich aus dem Werkstoff ausgast.

Unter Kunststoff wird in der vorliegenden Anmeldung ein technischer Werkstoff verstanden, der aus Makromolekülen besteht und vollsynthetisch durch Polymerisation, das heißt Verknüpfung von kleinen Molekülen oder Monomeren zu Makromolekülen oder Polymeren oder durch Abwandlung von makromolekularen Naturstoffen hergestellt wird, einschließlich aller daraus abgewandelten oder hergeleiteten Verbundkunststoffe, Compounds, Polymerlegierungen, Copolymere u. ä. Üblicherweise sind Kunststoffe auf Basis von Kohlenstoff aufgebaut, können aber auch auf Siliciumbasis beruhen. Unter einem Polymerwerkstoff wird in der vorliegenden Anmeldung ein aus Polymeren oder Makromolekülen zusammengesetzter oder aufgebauter Werkstoff verstanden, der neben den Kunststoffen oder synthetischen Polymerwerstoffen auch natürliche Polymerwerkstoffe umfasst, beispielsweise Polysaccharide, Proteine, Naturkautschuk oder Naturharze. Die unerwünschte Substanz im Sinne der vorliegenden Anmeldung ist jede Substanz, die nach dem Primärprozess noch in dem Polymerwerkstoff oder Kunststoff des Prozessproduktes enthalten ist und für die Struktur oder die Eigenschaften des Polymerwerkstoffes oder den Kunststoff nicht oder nicht mehr erforderlich ist.

Unter Ausgasen der unerwünschten Substanz wird verstanden, dass die unerwünschte Substanz aus dem Gefüge oder Volumen des Werkstoffs, insbesondere Polymerwerkstoffes oder Kunststoffes, in der Gasphase oder Dampfphase austritt.

Der vorgegebene Druck- und Temperaturbereich umfasst oder entspricht im Allgemeinen Normalbedingungen, denen die Prozessprodukte nach der Entnahme aus dem Autoklaven ausgesetzt werden, beispielsweise beim anschließenden Lagern oder Transport oder Weiterverarbeiten, bzw. denen der Autoklave beim Normalbetrieb oder Primärprozess ausgesetzt ist. Zumindest für die Prozessprodukte umfasst der vorgegebene Druck- und Temperaturbereich im Allgemeinen normale Atmosphärenbedingungen in einem gemäßigten Klima und/oder wenigstens einen Druck von wenigstens annähernd Atmosphärendruck und wenigstens eine Temperatur zwischen - 15 °C und + 40 °C, insbesondere zwischen 0 °C bis 35 °C, vorzugsweise zwischen 5 °C und 25 °C.

Die unerwünschte(n) Substanz(en) in dem Kunststoff oder Polymerwerkstoff eines Prozessprodukt kann bzw. können Restbestände, Additive, Fremdeinlagerungen, Nebenprodukte oder Verunreinigungen sein, insbesondere Weichmacher, die die Erweichungstemperatur oder Sprödigkeit oder Härte des Kunststoffes herabsetzen, oder Lösungsmittel oder bei einem chemischen Prozess, beispielsweise einer Molekülverkettung oder -vernetzung, entstandene Reaktionsprodukte. Die Kunststoffe oder Polymerwerkstoffe sind vorzugsweise fest, können aber auch in pastösem oder flüssigem Zustand oder in Form seines Schaumes vorliegen. Ohne Beschränkung der Allgemeinheit sind hier zu nennen:
a) Schmelzklebstoffe, insbesondere feste Klebstoffe, Klebefolien oder Klebeschichten, im Allgemeinen aus amorphen oder teilkristallinen Thermoplasten oder thermoplastischen Elastomeren oder Kondensationsharzen,
b) Lösungsmittelklebstoffe, d.h. in organischem Lösungsmittel gelöste Kunststoffe, die die Klebeverbindung nach Verdunsten oder Verdampfen des Lösungsmittels herstellen, insbesondere harte Kunststoffe, Kontaktklebstoffe und Reaktionsklebstoffe, z. B. Zweikomponentenkleber,
c) amorphe oder teilkristalline Thermoplaste, die normalerweise bei normaler Temperatur glasklar und meist spröde (amorphe TP) oder getrübt und meist zäh-hart (teilkristalline TP) sind und jeweils durch eingelagerte Weichmacher-Fremdmolekülen weichelastisch gemacht werden können, wobei durch Ausdampfen der Weichmacher der ausgehärtete oder starre Zustand sich (wieder) einstellt,
d) beispielsweise einer oder mehrere der folgenden Kunststoffe, die wenigstens teilweise auch den vorgenannten Gruppen zugeordnet werden können:
   Synthesekautschuke, PVB (Polyvinlybutyral), PA (Polyamid ), PVE (Polyvinylether), PIB (Polyisobuten), CR (Chlorbutadien-Elastomer), S/B/S (Styrol/Butadien/Styrol-Blockcopolymer ), ACM (Acrylester-Elastomer), TPU (thermoplastisches Polyurethan-Elastomer), PVAL (Polyvinylalkohol), S/EBM/S Styrol/Ethylen/Buten/Styrol-TPE), E-thylen-Copolymer, E/VA (Ethylen/Vinylacetat-Elastomer), PE (Polyester), IIR (Isobuthylen/Isopren-Elastomer), EPDM (Ethylen-Propylen-Dien-Elastomer), PF (Phenol-Formaldehyd-Harze), UF (Harnstoff-Formaldehyd-Harze), MF (Melamin-Formaldehyd-Harze), Reaktionsharze, EP (Epoxidharze), PUR (vernetzte Polyurethane, Polycarbamate), PVC (Polyvinylchlorid), PMMA (Polymethylmethacrylat), PVAC (Polyvinylacetat).

Diese Kunststoffe oder Kunststoffprodukte können ihren Zustand durch Erstarren oder Aushärten bei Ausdampfen eines Weichmachers, Lösungsmittels oder Reaktionsprodukts verändern. Die Maßnahmen gemäß der Erfindung erlauben das vollständige Entfernen der noch in dem Kunststoff enthaltenen Reste des Weichmachers, Lösungsmittels oder Reaktionsprodukts, ohne den Kunststoff zu schädigen.

In einer besonders vorteilhaften Ausführungsform wird die unerwünschte Substanz zumindest teilweise, vorzugsweise zumindest überwiegend, aus dem Prozessprodukt oder Innenteil des Autoklaven in der Gasphase (oder: Dampfphase) oder durch Übergang in die Gasphase (oder: ausgegast, ausgedampft) herausgelöst, ohne das Prozessprodukt oder das Innenteil zu zerstören oder zu zersetzen, und die herausgelöste unerwünschte Substanz mit dem Spülgas aus dem Autoklaven ausgeleitet wird.

Vorzugsweise wird das Herauslösen der unerwünschten Substanz(en) durch Einstellen entsprechender Temperaturen und/oder Drücke in dem Autoklaven verwirklicht, wobei die Temperatur und/oder Druck in dem Autoklaven derart eingestellt werden bzw. wird, dass der Dampfpartialdruck oder die Dampfdruckkurve der unerwünschten Substanz(en) in dem Autoklaven erhöht oder deren Siedepunkt erniedrigt wird, so dass die Verdampfungsrate oder Ausgasungsrate der Substanz aus dem Polymerwerkstoff oder Kunststoff erhöht wird.

In einer vorteilhaften Ausführungsform wird in dem Autoklaven dazu ein Unterdruck oder ein Vakuum gemäß einem vorgegebenen zeitlichen Druckverlauf erzeugt. Der Druckverlauf oder Druck wird dabei abhängig von der jeweiligen Dampfdruckkurve der betroffenen unerwünschten Substanz(en) eingestellt und/oder zeitweise in einem Bereich zwischen 1 mbar und 800 mbar, insbesondere in einem Bereich zwischen 80 mbar und 600 mbar bzw. im Bereich von Feinvakuum und Grobvakuum. Es hat sich als vorteilhaft herausgestellt, das Vakuum schrittweise oder in Stufen zu erhöhen bzw. den Druck entsprechend schrittweise zu erniedrigen. Dies erfolgt zumindest zeitweise in dem zeitlichen Druckverlauf, insbesondere zu Beginn. Zum Durchführen dieser Evakuierung oder Drucksenkung ist wenigstens eine an den Autoklaven angeschlossene oder anschließbare Gasfördereinrichtung, insbesondere eine Evakuierungseinrichtung, die insbesondere wenigstens eine Vakuumpumpe umfasst, vorgesehen.

In einer besonderen Ausführungsform ist die Gasfördereinrichtung oder Evakuierungseinrichtung an wenigstens zwei verschiedene Autoklaven angeschlossen oder anschließbar. Insbesondere kann für mehrere Autoklaven ein Netzwerk von Ventilen und wenigstens zwei Vakuumpumpen vorgesehen sein, die getrennt oder gemeinsam über Parallelschaltung an jeweils einen Autoklaven angeschlossen werden können. Die Evakuierungseinrichtung umfasst demnach wenigstens zwei Vakuumpumpen, wobei jeweils wenigstens eine Vakuumpumpe mit wenigstens einem der Autoklaven und jeweils wenigstens eine andere der Vakuumpumpen mit wenigstens einem anderen Autoklaven verbunden oder verbindbar und/oder beide Vakuumpumpen durch Parallelschaltung gemeinsam mit wenigstens einem Autoklaven verbunden oder verbindbar sind.

Die Steuerung der Verdampfungsrate oder des Dampfpartialdruckes der unerwünschten Substanz(en) in dem Autoklaven über die Einstellung des Druckes hat den Vorteil, dass die Temperatur im Autoklaven vergleichsweise niedrig gehalten werden kann und somit der Einfluss des Sekundärprozesses auf das aus dem Primärprozess entstandene Prozessprodukt vernächlässigbar ist bzw. das Prozessprodukt in seinen Eigenschaften unverändert bleibt. So kann insbesondere die Temperatur beim Sekundärprozess innerhalb des Auoklaven deutlich unterhalb der Erweichungstemperatur oder der Schmelztemperatur des Polymerwerkstoffes oder Kunststoffes gehalten werden und/oder bei oder unter der am Ende des Primärprozesses herrschenden Prozesstemperatur gehalten werden. Vorzugsweise liegt die Temperatur beim Sekundärprozess zumindest in der Größenordnung in einem Bereich, der dem Temperaturbereich am oder gegen Ende des Primärprozesses entspricht.

Es ist aber auch alternativ oder zusätzlich zur Druckeinstellung auch möglich, den Dampfpartialdruck oder die Dampfdruckkurve der unerwünschten Substanz(en) durch Steuerung oder Regelung der Temperatur im Autoklaven gemäß einem vorgegebenen zeitlichen Verlauf zu erhöhen, um das Herauslösen aus dem Polymerwerkstoff und/oder dem Kunststoff des Prozessproduktes zu unterstützen.

Sowohl bei der Einstellung des Druckes als auch der Temperatur beinhaltet ein zeitlicher Verlauf eine zunächst beliebige Abhängigkeit der jeweiligen Größe Druck oder Temperatur von der Zeit und insbesondere auch einen im Wesentlichen zumindest zeitweise konstanten, zeitunabhängigen Verlauf der Temperatur oder des Druckes.

Das Verfahren gemäß der Erfindung wird vorzugsweise als Sekundärprozess in Kombination mit wenigstens einem Primärprozess, in dem wenigstens ein Prozessprodukt in wenigstens einem Autoklaven erzeugt, verarbeitet oder behandelt wird, verwendet, wodurch ein Verfahren zum Bereitstellen von Prozessprodukten realisiert wird. Im Allgemeinen wird bzw. werden nach dem Sekundärprozess, der den Spülschritt umfasst, das oder die Prozessprodukt(e) aus dem Autoklaven entnommen und vorzugsweise anschließend ein erneuter Primärprozess mit neuen Prozessprodukt(en) im Autoklaven durchgeführt. Es können nach jedem Primärprozess oder auch nur nach einer vorgegebenen Anzahl von Primärprozessen die Sekundärprozesse durchgeführt werden, letzteres insbesondere, wenn nur der Autoklav gereinigt werden soll.

Der Primärprozess, während dessen das Prozessprodukt erzeugt, verarbeitet oder behandelt wird, findet vorzugsweise gemäß einem vorgegebenen zeitlicher Verlauf der Prozesstemperatur und/oder des Prozessdruckes im Autoklaven zumindest zeitweise unter Überdruck, insbesondere in einem Bereich zwischen 1,5 bar und 30 bar, und/oder erhöhter Prozesstemperatur, insbesondere in einem Bereich zwischen 60 °C und 180 °C, statt.

Insbesondere wird dazu, beispielsweise durch Öffnen eines Ventils, das Spülgas in den unter Unterdruck stehenden Autoklaven eingelassen und gleichzeitig oder zeitlich versetzt wird die Gasfördereinrichtung betrieben, um das Spülgas mit der unerwünschten Substanz abzupumpen. So erreicht man entweder ein Auffüllen des Autoklaven mit Spülgas und anschließendes Abpumpen des Spülgases mit der unerwünschten Substanz oder einen praktisch kontinuierlichen Fluss oder Volumenstrom des Spülgases durch den Autoklaven. Dabei genügt es in einer vorteilhaften Ausführungsform, wenn die Gasatmosphäre im Autoklaven einmal ausgetauscht wird, dessen Innenvolumen also einmalig gespült wird. Der Volumenstrom des Spülgases ergibt sich dann als Quotient aus dem Volumen des Autoklaven und der zum einmaligen Evakuieren erforderlichen, von der Pump- oder Förderleistung abhängigen Förder- oder Evakuierungszeit.

Die Vorrichtung enthält im Allgemeinen wenigstens eine Kontrolleinrichtung zum Steuern und/oder Regeln des Sekundärprozesses im Autoklaven, wobei insbesondere die Evakuierungseinrichtung von der Kontrolleinrichtung angesteuert oder ansteuerbar ist und wobei vorzugsweise die Kontrolleinrichtung mit Mitteln zum Steuern und/oder Regeln wenigstens eines Primärprozesses zum Erzeugen, Verarbeiten oder Behandeln des Prozessproduktes in dem wenigstens einen Autoklaven in Signal- und/oder Datenaustausch steht oder bringbar ist.

Bevorzugte Anwendungen sind bei der Verbundglas- oder Isolierglasherstellung. Es sind aber eine Vielzahl anderer Anwendungen möglich in Herstellung, Weiterverarbeitung, Behandlung und Entsorgung von Prozessprodukten, insbesondere Kunststoffen und Polymerwerkstoffen, sowie der Reinigung von Autoklaven.

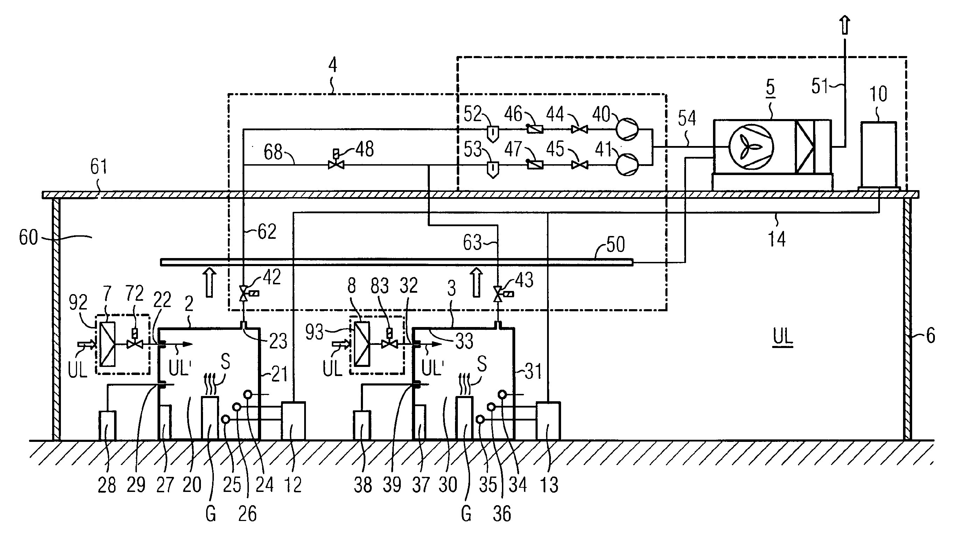

Die Erfindung wird im Folgenden anhand von Ausführungsbeispielen weiter erläutert. Dabei wird auf die einzige FIG der Zeichnung Bezug genommen.

Im Halleninnenraum 60 einer Halle 6 für industrielle Prozesse sind einer oder mehrere, im Beispiel der Figur zwei, Autoklaven 2 und 3 aufgestellt. Jeder der Autoklaven 2 und 3 umfasst einen von einer druckdichten und gasdichten Wandung 21 bzw. 31 umschlossenen Innenraum 20 bzw. 30, in den über eine - nicht dargestellte - Öffnung, die mittels einer Tür oder einem anderen Verschluss druckdicht verschließbar ist, Prozessgut oder Prozessprodukte G eingebracht werden können. Die Innenräume 20 und 30 der Autoklaven 2 und 3 bilden im Betrieb der Autoklaven 2 und 3 druckdicht verschlossene Prozessräume oder Prozesskammern, in denen Primärprozesse zum Erzeugen (Herstellen), Weiterverarbeiten oder Behandeln von Prozessprodukten 5 unter vorgegebenen Temperaturen und Drücken durchgeführt werden können. Zum Steuern oder Regeln der Primärprozesse in den Autoklaven 2 und 3 sind neben den Autoklaven 2 und 3 zugehörige Kontrolleinrichtungen 12 und 13 angeordnet, die üblicherweise als Schaltschränke mit programmierten standardisierten speicherprogrammierbarer Steuerungen (SPS) oder mit Hilfe von Computern (PCs) ausgeführt sind. Ferner sind zum Steuern und Regeln des Primärprozesses im Autoklaven 2 bzw. 3 jeweils Messeinrichtungen zum Messen von Prozessgrößen, im Beispiel der FIG ein Temperatursensor 25 bzw. 35 und ein Drucksensor 26 bzw. 36, sowie Stellglieder zum Steuern der Prozessgrößen, im Beispiel der FIG eine Heizeinrichtung 27 bzw. 37 und eine Gaszuführeinrichtung 28 bzw. 38 (z.B. eine Pumpeneinrichtung), die über einen Einlass 29 bzw. 39 Gas zur Veränderung, im Allgemeinen zur Erhöhung, des Druckes im Innenraum 20 bzw. 30 zuführt, vorgesehen.

Ferner ist in jedem Autoklaven 2 und 3 zusätzlich jeweils ein Drucksensor, insbesondere ein Differenzdrucksensor, 24 bzw. 34 vorgesehen, der einer Bedienperson meldet, ob die Druckdifferenz zwischen der Halle 6 und den Innenräumen 20 und 30 ausreichend klein ist, so dass die Autoklaventür nach Beendigung eines Prozesses geöffnet werden kann und die Prozessprodukte G aus den Autoklaven 2 und 3 entnommen werden können.

Um beim Öffnen eines der Autoklaven 2 oder 3 aus diesem austretende Gase oder Dämpfe gleich abführen zu können, ist oberhalb der Autoklaven 2 und 3 eine Abluftaufnahmeeinrichtung 50 angeordnet, die mit der Unterdruckseite oder Saugseite einer Abluftfördereinrichtung 5 verbunden ist. Die Abluftfördereinrichtung 5 enthält wenigstens einen Ventilator oder allgemein eine Strömungsmaschine zum Fördern von Gasen. Die Abluftfördereinrichtung 5 ist in der Regel einstufig mit einem eingeschalteten Zustand mit nur einer Förderleistung und einem ausgeschalteten Zustand ausgebildet, kann aber auch mehrstufig, d.h. mit mehreren einstellbaren Förderleistungen und/oder mit mehreren Ventilatoren in Parallelschaltung oder Reihenschaltung ausgebildet sein. Die Abluftfördereinrichtung 5 kann manuell oder auch automatisch gesteuert oder betrieben werden hinsichtlich des Ein- und Ausschaltens oder hinsichtlich ihrer Förderleistung, sofern diese einstellbar ist. Das Absaugen oder Abführen von Umgebungsluft UL aus dem Halleninnenraum 60 zumindest oberhalb der Autoklaven 2 und 3 ist durch Pfeile veranschaulicht.

Ferner ist, beispielsweise auf dem Hallendach 61 oder an einer beliebigen anderen Stelle, eine Steuer- und/oder Regeleinrichtung 10 angeordnet, die mit den Kontrolleinrichtung 12 und 13 des Autoklaven 2 bzw. 3 über eine Steuer- oder Datenleitung 14, insbesondere eine Datenbus, verbunden ist. Es können insbesondere vier oder acht Dateneingänge und -ausgänge vorgesehen sein pro Autoklaven bzw. Kontrolleinrichtung 12 bzw. 13.

Beide Autoklaven 2 und 3 weisen in ihren oberen Bereichen jeweils einen Einlass 22 bzw. 32 und einen Auslass 23 bzw. 33 zum Einleiten bzw. Ausleiten von Gasen oder Dämpfen zumindest in einem Sekundärprozess auf.

Der Einlass 22 bzw. 32 der Autoklaven 2 und 3 ist über ein Einlassventil 72 bzw. 83 jeweils mit einer Konditioniereinrichtung 7 bzw. 8 zum Konditionieren von durchtretender Umgebungsluft UL aus dem Halleninnenraum 60 verbunden. Die Konditioniereinrichtungen 7 und 8 umfassen insbesondere Luftfiltereinheiten, beispielsweise Grobfilter bis zur Klasse G4, Feinfilter ab Klasse F5 bis hin zu Schwebstofffiltern, können aber auch zusätzlich oder alternativ Luftwascheinrichtungen oder andere Reinigungskomponenten enthalten. Ferner können die Konditioniereinrichtungen 7 und 8 auch alternativ oder zusätzlich Lufttrocknungseinrichtungen zum Trocknen der Umgebungsluft UL enthalten, insbesondere auf dem Prinzip der Kältetrocknung basierende Systeme, bei denen die zu trocknende Luft an einer gekühlten Stelle eines Kältekreislaufes, insbesondere einem (Direkt-)Verdampfer oder Wärmetauscher, vorbeigeführt wird und die in der Umgebungsluft enthaltene Feuchtigkeit abgeschieden oder auskondensiert wird. Dieses Abkühlen und Kondensieren der Umgebungsluft kann insbesondere über einen Kompressionskältekreislauf oder -kältemaschine oder auch einen Absorptionskältekreislauf oder -kältemaschine erfolgen. Die Abkühlung erfolgt typischerweise auf Temperaturen von 3 °C bis 4 °C. Ferner sind im Allgemeinen Tröpfchenabscheider nachgeschaltet, um auskondensierte und suspendierte Flüssigkeitströpfchen aus der abgekühlten Umgebungsluft abzuscheiden, und, insbesondere unter Wärmerückgewinnung eine Rückaufheizung der Umgebungsluft vorgesehen. Solche Konditioniereinrichtungen sind an sich bekannt und bedürfen deshalb keiner näheren Erläuterung. Die relative Luftfeuchte der konditionierten Umgebungsluft UL' wird insbesondere in einem Bereich unter 60 %, vorzugsweise unter 30 %, beispielsweise bei 25 % oder darunter, gehalten. Die Konditioniereinrichtungen 7 und 8 bilden zusammen mit den zugehörigen Einlassventilen 72 bzw. 83 jeweils eine Spülgaszuführeinrichtung 92 bzw. 93. Die Umgebungsluft UL hat die für Luft in der Atmosphäre oder in Gebäudeinnenräumen typische Zusammensetzung, insbesondere von 20 Vol.-% bis 21 Vol.-% Sauerstoff, 78 Vol.-% bis 79 Vol.-% Stickstoff, 0,8 Vol.-% bis 1 Vol.-% Argon, 0,03 Vol.-% bis 0,05 Vol.-% Kohlendioxid und weitere Spurengase (Edelgase, Wasserstoff, Abgase aus Prozessen).

Die Auslässe 23 und 33 der Autoklaven 2 bzw. 3 sind mit einem zugehörigen Auslassventil 42 bzw. 43 strömungstechnisch verbunden. Jedes der Auslassventile 42 und 43 ist über eine Leitung 62 bzw. 63 und über eine Serienschaltung aus einem Ölabscheider 52 bzw. 53, einer Rückschlagklappe 46 bzw. 47 und einem Sicherheitsventil 44 bzw. 45 mit der Saugseite oder Unterdruckseite einer zugehörigen Vakuumpumpe 40 bzw. 41 verbunden. Zwischen die beiden Leitungen 62 und 63 ist eine Verbindungsleitung 68 geschaltet, in der sich ein weiteres Ventil als Verbindungsventil 48 befindet. Die Ventile 42, 43, 44, 45 und 48 sind im Allgemeinen steuerbar und Sperrventile oder Absperrventile, die zwischen einem geöffneten und einem geschlossenen oder sperrenden Zustand hin und her schaltbar sind. Die Ventile 42, 43, 44, 45 und 48, die Vakuumpumpen 40 und 41, die Rückschlagklappen 46 und 47 und die entsprechenden Leitungen 62, 63 und 68 bilden eine an die Auslässe 23 und 33 angeschlossene Evakuierungseinrichtung 4 zum Evakuieren der Innenräume 20 und 30 der Autoklaven 2 und 3. Die Evakuierungseinrichtung 4 ist über eine Leitung 54, die die Druckseiten oder Förderseiten der Vakuumpumpen 40 und 41 zusammenschaltet, mit der Abluftfördereinrichtung 5 verbunden.

Die in der Evakuierungseinrichtung 4 weiter vorgesehenen Ölabscheider 52 und 53 dienen dabei zum Abscheiden von Ölnebeln oder Öl- oder Fettdämpfen aus der aus den Autoklaven 2 und 3 abgeführten Gasatmosphäre. Die von den Ölabscheidern 52 und 53 abgeschiedenen Ölnebel können insbesondere bei einem Primärprozess, bei dem Überdruck in den Autoklaven 2 bzw. 3 eingestellt wird durch das Öl der den Überdruck erzeugenden Pumpen der Gasfördereinrichtungen 28 und 38 verursacht werden. Die Ölabscheider 52 und 53 dienen neben der Vermeidung von Verpuffungen vor allem dazu, die Saugseiten der Vakuumpumpen 40 und 41 vor einer Verschmutzung mit Öl zu schützen. Dadurch können trockenlaufende Pumpen als Vakuumpumpen verwendet werden, beispielsweise Drehschiebervakuumpumpen.

Durch Öffnen des Verbindungsventils 48 können die beiden Vakuumpumpen 40 und 41 in einem Betriebsmodus parallel geschaltet werden, wodurch bei Öffnen nur eines Auslassventils 23 oder 33 eines der Autoklaven 2 oder 3 beide Vakuumpumpen 40 und 41 parallel Gas aus dem Autoklaveninnenraum 20 bzw. 30 absaugen und dadurch das Saugvolumen oder die Sauggeschwindigkeit im Wesentlichen verdoppelt werden kann. Bei geschlossenem Verbindungsventil 48 wird die Vakuumpumpe 40 ausschließlich zum Evakuieren des Innenraumes 20 des Autoklaven 2 und die Vakuumpumpe 41 ausschließlich zum Evakuieren des Innenraumes 30 des Autoklaven 3 verwendet.

Die Abluftfördereinrichtung 5 sowie die Vakuumpumpen 40 und 41 zusammen mit den Sicherheitsventilen 44 und 45, den Rückschlagklappen 46 und 47 und den Ölabscheidern 52 und 53 sind vorzugsweise, wie dargestellt, auf dem Hallendach 61 der Halle 6 angeordnet. Die entsprechenden Leitungen 62, 63 und 50 sind durch das Hallendach 61 durchgeführt. An der Druckseite der Abluftfördereinrichtung 5 ist eine Abluftleitung 51 angeschlossen, über die die aus dem Halleninnenraum 60 abgesaugte Umgebungsluft UL und das über die Evakuierungseinrichtung 4 aus einem oder beiden Autoklaven 2 und 3 abgesaugte und ggf. von Öl befreite Gas als Fortluft oder Abluft ins Freie geführt wird.

In jedem Autoklaven 2 und 3 sind unabhängig voneinander mittels der Evakuierungseinrichtung 4 und der zugehörigen Spülgaszuführeinrichtungen 92 und 93 Sekundärprozesse im Anschluss an einen Primärprozess und/oder vor einem Primärprozess durchführbar. Bei dem Sekundärprozess werden störenden oder unerwünschte Substanzen aus den Autoklaven 2 und 3 abgeführt. dazu wird wie folgt vorgegangen:

Zunächst wird nach dem Primärprozess der Innenraum 20 bzw. 30 des oder der Autoklaven 2 und 3 mit der Evakuierungseinrichtung 4 evakuiert, wobei ein Unterdruck erzeugt wird, der die noch in den Prozessprodukten G enthaltenen Substanzen schneller und in größeren Mengen verdampfen oder in die Gasphase überführen lässt oder, mit anderen Worten, den Dampfpartialdruck der Substanz(en) bei gleicher Temperatur deutlich erhöht. Vorzugsweise liegt die Temperatur im Autoklaven 2 oder 3 bei diesem Unterdruck oberhalb der Siedetemperatur der zu verdampfenden Substanzen. Dabei kann die Temperatur am Ende des Primärprozesses beibehalten werden. Der Unterdruck kann in mehreren Schritten erhöht werden, beispielsweise ein 50 prozentiges Vakuum, dann ein 6o prozentiges und dann ein 70 prozentiges oder sogar bis zu 90 prozentiges Vakuum eingestellt werden, entsprechend etwa 500 mbar, 400 mbar, 300 mbar bzw. 100 mbar Restdruck absolut. Der Unterdruck wird in Anpassung an die bei dem Prozessprodukt 5 zu verdampfende Substanz und abhängig von der Temperatur eingestellt und ist mit der beschriebenen Evakuierungseinrichtung 4 kontinuierlich einstellbar oder anpassbar. Dieser Unterdruck bzw. dieses Vakuum wird nun so lange aufrechterhalten, bis die Substanz weitgehend aus dem Prozessprodukt 5 ausgedampft ist.

Nun wird in einem anschließenden Spülschritt bei Druckausgleich oder Atmosphärendruck gereinigte Umgebungsluft UL' über die Spülgaszuführeinrichtungen 92 und 93 als Spülgas in den Autoklaven 2 bzw. 3 über den Einlass 22 bzw. 32 eingespült. Dazu wird bei dem Endunterdruck des Evakuierungsschritts einfach das entsprechende Einlassventil 72 bzw. 83 geöffnet und aufgrund des Unterdrucks im Autoklaven 2 bzw. 3 gegenüber dem Umgebungsdruck strömt die gereinigte Umgebungsluft UL' in den Autoklaven 2 bzw. 3 durch den Einlass 22 bzw. 32 ein.

Sofort oder nach einer bestimmten Verweilzeit wird mittels der Evakuierungseinrichtung 4 das Spülgas UL' zusammen mit den ausgedampften unerwünschten Substanzen aus den Autoklaven 2 oder 3 über den Auslass 23 bzw. 33 abgeführt und über die Abluftfördereinrichtung 5 über die Abluftleitung 51 ausgeblasen. Die Strömungsführung des Spülgases im Autoklaven 2 bzw. 3 wird dadurch unterstützt, dass der Einlass 22 und der Auslass an entgegengesetzten Seiten des Autoklaven 2 bzw. 3 angeordnet sind. In einer nicht dargestellten Ausführungsform sind Einlass 22 bzw. 32 und Auslass 23 bzw. 33 in gegenüberliegenden Bereichen diagonal zueinander angeordnet, so dass eine Diagonalspülung erfolgen kann.

Dabei wird Spülgas UL' nur solange zugeführt und wieder abgepumpt, bis das Volumen des Autoklaven 2 bzw. 3 einmal gespült worden ist, also praktisch ein Luftwechsel durchgeführt wurde. Bei einem Volumen des Autoklaven 2 bzw. 3 von beispielsweise 100 m³ und einer Förderleistung der Vakuumpumpen allein von 500 m³ pro h und in Parallelschaltung von 1000 m³ pro h wird das Volumen in bereits 6 12 min. bzw. 6 min. komplett ausgetauscht und dann der Sekundärprozess beendet.

Nun können, nach Druckausgleich auf Umgebungsdruck, die Prozessprodukte G aus dem Autoklaven 2 bzw. 3 entnommen werden. Ein späteres Ausgasen der Substanzen S aus dem Prozessprodukt G wird durch den Sekundärprozess verhindert, da das Ausgasen definiert und kontrolliert bereits bei der Fertigung in dem Sekundärprozess erfolgte und somit praktisch keine Substanz S mehr in den Prozessprodukten G vorhanden ist..

Ein Vorteil des Sekundärprozesses ist auch, dass im Autoklaven, beispielsweise dessen Innenwandisolierung anhaftende oder abgelagerte oder eingebundene Verschmutzungen ebenfalls ausgetragen werden können und damit eigene Reinigungsprozeduren entfallen können.

Dieses Verfahren und diese Vorrichtung sind bei einer Vielzahl von industriellen Prozessen anwendbar, zum Reinigen oder Befreien von Prozessprodukten und/oder Autoklaven von störenden oder unerwünschten Substanzen, die nach dem eigentlichen Fertigungs- oder Verarbeitungsprozess Probleme bereiten können. Ohne Beschränkung der Allgemeinheit seien hier genannt:
- Glasherstellung, insbesondere Herstellung von Spezialgläsern, Verbundglasscheiben und Isolierglaseinheiten, insbesondere für Fenster in Gebäuden oder Kraftfahrzeugen,
- Kunststoffherstellung, insbesondere Kunststofffolien, PVC-, Schaumund/oder Elastomer-Herstellung
- Baustoffindustrie
- Sterilisation, medizinisch oder Lebensmittel
- Pulverherstellung
- Lebensmittelherstellung und -Verpackung
- Faserverbundwerkstoffe
- chemische Industrie für chemische Reaktionen oder Analysen
- Metallurgische Verfahren
- Reifenherstellung
- Autoklavensteuerung
- Flugzeugbau
- Automobilbau, insbesondere für Automobilsport

Bei der Herstellung von Verbundsicherheitsglasscheiben (VSG) werden, wie eingangs beschrieben, beim Primärprozess zwei bereits beschichtete Glasscheiben über eine Kunststofffolie, beispielsweise die Trisofil-Folie, unter Überdruck, typischerweise um die 13,5 bar, und einer erhöhten Temperatur von typischerweise 150 °C, verbunden, wobei die zunächst weiche Kunststofffolie unter Freigabe oder Ausdampfen von Weichmacher, beispielsweise Dihexyladipat, aushärtet und die Scheiben starr verbindet.

Beim Herstellen von Isolierglasfenstern werden zwei derartige Verbundglasscheiben in einem gemeinsamen Rahmen aus Aluminium oder Kunststoff eingesetzt über eine Abdichtmasse, beispielsweise eine unter dem Handelsnamen Thioplast bekannte Abdichtmasse. es hat sich herausgestellt, dass auch diese Abdichtmassen mit den restlichen Weichmachern der Verbundglasscheiben reagieren bzw. von diesen angegriffen werden und damit die Haltbarkeit der Isolierglaseinheiten herabsetzen. Auch dieses Problem wird ebenso wie das vorgenannte Problem bei der Verbundglasherstellung gemäß der Erfindung zumindest verringert werden und bei ausreichender Intensität und Dauer des Sekundärprozesses sogar beseitigt.

### Bezugszeichenliste

- 2: Autoklav
- 3: Autoklav
- 4: Evakuierungseinrichtung
- 5: Abluftfördereinrichtung
- 6: Halle
- 7, 8: Reinigungseinrichtung
- 10, 12,13: Kontrolleinrichtung
- 14: Datenbus
- 20: Innenraum
- 21: Wandung
- 22: Einlass
- 23: Auslass
- 24: Drucksensor
- 25: Temperatursensor
- 30: Innenraum
- 31: Wandung
- 32: Einlass
- 33: Auslass
- 34: Drucksensor
- 35: Temperatursensor
- 40, 41: Vakuumpumpe
- 42, 43: Auslassventil
- 44, 45: Sicherheitsventil
- 46, 47: Rückschlagklappe
- 48: Verbindungsventil
- 50: Abluftaufnahmeeinrichtung
- 51: Abluftleitung
- 54: Leitung
- 60: Halleninnenraum
- 61: Hallendach
- 62, 63, 68: Leitung
- 72, 83: Einlassventil
- 92, 93: Spülgaszuführeinrichtung
- S: Substanz
- UL, UL': Umgebungsluft

## Patentansprüche

1. Verfahren zum Abführen wenigstens einer unerwünschten Substanz aus oder von wenigstens einem in einem Innenraum eines Autoklaven befindlichen Prozessprodukt und/oder aus oder von wenigstens einem im Innenraum befindlichen oder an den Innenraum angrenzenden Innenteil des Autoklaven, bei dem
a) in wenigstens einem Spülschritt
b) zunächst Spülgas in den Autoklaven eingeleitet wird und
c) anschließend das Spülgas zusammen mit der bzw. den abzuführenden Substanz(en) aus dem Autoklaven ausgeleitet wird,
d) wobei als Spülgas Umgebungsluft aus einer Umgebung des Autoklaven, insbesondere aus einem Innenraum eines den Autoklaven umgebenden Gebäudes, insbesondere einer Halle, und/oder einer Außenumgebung außerhalb eines den Autoklaven umgebenden Gebäudes, insbesondere einer Halle, verwendet wird.

2. Verfahren nach Anspruch 1, bei dem die Umgebungsluft vor dem Einleiten in den Autoklaven konditioniert wird.

3. Verfahren nach Anspruch 2, bei dem die Umgebungsluft hinsichtlich Temperatur und/oder Feuchte und/oder Reinheit konditioniert wird, insbesondere gefiltert und/oder getrocknet wird.

4. Verfahren nach Anspruch 3, bei dem die relative Feuchte der Umgebungsluft auf einen Wert unterhalb 60 %, insbesondere unter 40 % und vorzugsweise unter 25 %, eingestellt wird.

5. Verfahren nach einem oder mehreren der vorhergehenden Ansprüche, bei dem das Prozessprodukt und/oder das Innenteil wenigstens teilweise aus wenigstens einem Werkstoff, insbesondere einem Polymerwerkstoff und/oder einem Kunststoff, bestehen bzw. besteht, der die wenigstens eine unerwünschte Substanz enthält, wobei die unerwünschte Substanz in einem vorgegebenen Druck- und Temperaturbereich aus dem Werkstoff ausgast.

6. Verfahren nach Anspruch 5, bei dem der vorgegebene Druck- und Temperaturbereich, zumindest für das oder die Prozessprodukt(e), wenigstens einen Druck von wenigstens annähernd Atmosphärendruck und wenigstens eine Temperatur zwischen - 15 °C und + 40 °C, insbesondere zwischen 0 °C bis 35 °C, vorzugsweise zwischen 5 °C und 25 °C umfasst.

7. Verfahren nach einem oder mehreren der vorhergehenden Ansprüche, bei dem
a) die unerwünschte Substanz zumindest teilweise, vorzugsweise zumindest überwiegend, aus dem Prozessprodukt oder Innenteil des Autoklaven in der Gasphase oder durch Übergang in die Gasphase herausgelöst wird, ohne das Prozessprodukt oder das Innenteil zu zerstören oder zu zersetzen, und
b) die herausgelöste unerwünschte Substanz mit dem Spülgas aus dem Autoklaven ausgeleitet wird.

8. Verfahren nach einem oder mehreren der vorhergehenden Ansprüche, bei dem zum oder beim Herauslösen der unerwünschten Substanz(en) die Temperatur und/oder der Druck in dem Autoklaven in einen solchen Bereich eingestellt wird, dass der Dampfpartialdruck oder die Dampfdruckkurve der unerwünschten Substanz(en) in dem Autoklaven erhöht wird oder deren Siedepunkt erniedrigt wird, insbesondere im Vergleich zu Bedingungen bei Raumtemperatur und Atmosphärendruck.

9. Verfahren nach einem oder mehreren der vorhergehenden Ansprüche, bei dem zum oder beim Herauslösen der unerwünschten Substanz(en) in dem Autoklaven ein Unterdruck oder Vakuumdruck gemäß einem vorgegebenen zeitlichen Druckverlauf erzeugt wird, wobei der Druck insbesondere abhängig von der Dampfdruckkurve der unerwünschten Substanz(en) ist und/oder insbesondere zumindest zeitweise in einem Bereich zwischen 1 mbar und 800 mbar, vorzugsweise in einem Bereich zwischen 80 mbar und 600 mbar, eingestellt wird und/oder wobei der Druck zumindest zeitweise in einzelnen aufeinanderfolgenden Schritten oder Stufen erniedrigt wird.

10. Verfahren nach einem oder mehreren der vorhergehenden Ansprüche, bei dem das Spülgas mit dem Prozessprodukt und/oder dem Innenteil des Autoklaven in Kontakt gebracht wird.

11. Verfahren nach einem oder mehreren der vorhergehenden Ansprüche, bei dem das während eines Spülschritts eingeleitete und durchgeleitete Volumen des Spülgases wenigstens annähernd gleich dem Volumen des Autoklaven entspricht.

12. Verfahren nach einem oder mehreren der vorhergehenden Ansprüche, bei dem während des Primärprozesses, während dem das Prozessprodukt erzeugt, verarbeitet oder behandelt wird, ein vorgegebener zeitlicher Verlauf der Prozesstemperatur und/oder des Prozessdruckes im Autoklaven eingestellt wird oder wurde, wobei vorzugsweise der Prozessdruck zumindest zeitweise über Atmosphärendruck, insbesondere in einem Bereich zwischen 1,5 bar und 30 bar, und/oder die Prozesstemperatur zumindest zeitweise über Raumtemperatur, insbesondere in einem Bereich zwischen 60 °C und 180 °C, liegen bzw. liegt.

13. Verfahren nach einem oder mehreren der vorhergehenden Ansprüche, bei dem das wenigstens eine Prozessprodukt wenigstens eine Folie oder Schicht, insbesondere eine Schaumschicht oder Kleberschicht, aus dem Kunststoff oder dem Polymerwerkstoff mit der wenigstens einen unerwünschten Substanz aufweist und/oder ein Verbundkörper mit wenigstens einer Folie oder Schicht, insbesondere eine Schaumschicht oder Kleberschicht, aus dem Kunststoff oder dem Polymerwerkstoff mit der wenigstens einen unerwünschten Substanz ist.

14. Verfahren nach Anspruch 13, bei dem im Primärprozess im Autoklaven wenigstens zwei Glasscheiben über eine Kunststofffolie oder Kunststoffschicht miteinander verbunden werden, wobei die Kunststofffolie zunächst durch in ihr enthaltene(n) Weichmacher plastisch oder elastisch verformbar ist und durch Einstellen der Temperatur) und/oder des Druckes im Autoklaven, insbesondere bei einer Temperatur zwischen 60 °C und 200 °C und einem Überdruck von 3 bar bis 20 bar, unter Ausdampfung von Weichmacher im Autoklaven ausgehärtet wird oder erstarrt und wobei die unerwünschte(n) Substanz(en) noch nicht aus der Kunststofffolie oder Kunststoffschicht ausgedampfte(r) Weichmacher ist bzw. sind.

15. Verfahren nach einem oder mehreren der vorhergehenden Ansprüche, bei dem aus dem Autoklaven auch Öl(e) und/oder Fett(e) ausgeleitet werden und vorzugsweise durch einen, vorzugsweise vor die Vakuumpumpe(n) geschalteten, Öl- oder Fettabscheider geführt werden bzw. von dem Spülgas getrennt bzw. wird bzw. werden, und/oder auch Verunreinigungen von der Innenwandung des Autoklaven oder von Gegenständen im Autoklaven abgelöst und aus dem Autoklaven ausgeleitet werden.

16. Verfahren nach einem oder mehreren der vorhergehenden Ansprüche, bei dem nach dem Sekundärprozess das oder die Prozessprodukt(e) aus dem Autoklaven entnommen wird bzw. werden und vorzugsweise anschließend ein erneuter Primärprozess mit neuen Prozessprodukt(en) im Autoklaven durchgeführt wird.

17. Verfahren zum Bereitstellen von Prozessprodukten, bei dem
a) in wenigstens einem Primärprozess wenigstens ein Prozessprodukt in wenigstens einem Autoklaven erzeugt, verarbeitet oder behandelt wird,
b) nach dem Primärprozess ein Verfahren nach einem oder mehreren der Ansprüche 1 bis 16 zum Abführen der wenigstens einen der wenigstens einen unerwünschten Substanz, vorzugsweise in demselben Autoklaven, durchgeführt wird.

18. Vorrichtung zum Abführen wenigstens einer unerwünschten Substanz aus oder von wenigstens einem in einem Innenraum eines Autoklaven befindlichen Prozessprodukt und/oder aus oder von wenigstens einem im Innenraum befindlichen oder an den Innenraum angrenzenden Innenteil des Autoklaven, insbesondere zum Durchführen eines Verfahrens nach einem oder mehreren der Ansprüche 1 bis 17, umfassend
a) Mittel zum Durchführen wenigstens eines Spülschrittes in wenigstens einem Autoklaven mit
b) wenigstens einer Spülgaszuführeinrichtung (92 bzw. 93) zum Einleiten von Spülgas in den Autoklaven,
c) wenigstens einer an den Autoklaven angeschlossenen oder anschließbaren Gasfördereinrichtung, insbesondere einer Evakuierungseinrichtung, die insbesondere wenigstens eine Vakuumpumpe umfasst, zum Ausleiten des Spülgases zusammen mit der bzw. den abzuführenden Substanz(en) aus dem Autoklaven,
d) wobei die Spülgaszuführeinrichtung Umgebungsluft aus einer Umgebung des Autoklaven, insbesondere aus einem Innenraum eines den Autoklaven umgebenden Gebäudes, insbesondere einer Halle, und/oder einer Außenumgebung außerhalb eines den Autoklaven umgebenden Gebäudes, insbesondere einer Halle, als Spülgas zuführt.

19. Vorrichtung nach Anspruch 18, bei der die Spülgaszuführeinrichtung wenigstens eine Konditioniereinrichtung zum Konditionieren der Umgebungsluft umfasst.

20. Vorrichtung nach Anspruch 19, bei der die Konditioniereinrichtung wenigstens einen Filter, insbesondere einen Grobfilter und/oder einen Feinfilter und/oder einen Schwebstofffilter, umfasst.

21. Vorrichtung nach Anspruch 19 oder Anspruch 20, bei der die Konditioniereinrichtung wenigstens eine Trocknungseinrichtung zum Trocknen der Umgebungsluft umfasst, insbesondere eine Kältetrocknungseinrichtung.

22. Vorrichtung nach einem oder mehreren der Ansprüche 19 bis 21 mit Mitteln zum zumindest teilweisen, vorzugsweise zumindest überwiegenden, Herauslösen der unerwünschten Substanz aus dem Prozessprodukt und/oder Innenteil des Autoklaven in der Gasphase oder durch Übergang in die Gasphase, ohne das Prozessprodukt oder das Innenteil zu zerstören oder zu zersetzen.

23. Vorrichtung nach Anspruch 22, bei der die Mittel zum zumindest teilweisen, vorzugsweise zumindest überwiegenden, Herauslösen der unerwünschten Substanz wenigstens eine an den Autoklaven angeschlossene oder anschließbare Gasfördereinrichtung, insbesondere eine Evakuierungseinrichtung, die insbesondere wenigstens eine Vakuumpumpe umfasst, aufweisen.

24. Vorrichtung nach Anspruch 23, bei der die Gasfördereinrichtung oder Evakuierungseinrichtung an wenigstens zwei verschiedene Autoklaven angeschlossen oder anschließbar ist und/oder wenigstens zwei Vakuumpumpen umfasst, wobei jeweils wenigstens eine Vakuumpumpe mit wenigstens einem der Autoklaven und jeweils wenigstens eine andere der Vakuumpumpen mit wenigstens einem anderen Autoklaven verbunden oder verbindbar und/oder beide Vakuumpumpen durch Parallelschaltung gemeinsam mit wenigstens einem Autoklaven verbunden oder verbindbar sind.

25. Vorrichtung nach einem oder mehreren der Ansprüche 18 bis 24, bei der wenigstens eine Abluftfördereinrichtung im Außenbereich des oder der Autoklaven angeordnet ist zum Abführen von aus dem oder den Autoklaven beim Öffnen austretender Abluft und/oder unerwünschter/n Substanz(en) in der Gasphase, wobei vorzugsweise die Vakuumpumpe(n) der Evakuierungseinrichtung mit ihren Förder- oder Überdruckseiten an die Abluftfördereinrichtung angeschlossen oder anschließbar sind zum Abführen der von der oder den Vakuumpumpen aus dem oder den Autoklaven abgesaugten Gasatmosphäre über die Abluftfördereinrichtung.
